# EUROPEAN PATENT APPLICATION

(11) **EP 4 474 083 A1**
(43) Date of publication of application: **11.12.2024**
(21) Application number: 24180220.6
(22) Date of filing: 05.06.2024
(51) Int. Cl.: B22F 10/28, B22F 12/13, B22F 12/47, B33Y 10/00, B33Y 30/00, B33Y 50/02, G02B 26/10

(54) **ADDITIVE MANUFACTURING APPARATUSES INCLUDING ENERGY EMITTERS FOR LOCALIZED HEATING**

(30) Priority: 06.06.2023 US 202363506484 P
(71) Applicant: General Electric Company, Schenectady, NY 12345 (US)
(72) Inventor: STEELE, William Joseph, Schenectady, NY 12345 (US); SIMMERMON, David Scott, Schenectady, NY 12345 (US); THOMPSON, Brian Thomas, Schenectady, NY 12345 (US)
(74) Representative: Hafner & Kohl PartmbB

(57) **Abstract**

A printing assembly (20) for an additive manufacturing apparatus (10) includes an energy emitter (109) configured to steer one or more emissions (111) across a build platform (14) to raise a temperature of a build material (48) on the build platform (14) from an initial temperature to a first temperature, the first temperature being less than a threshold temperature set by material dependent metallurgical properties, and a fusing beam emitter (108) configured to generate one or more laser beams (106) to raise the temperature of the build material (48) on the build platform (14) from the first temperature to a second temperature, the second temperature being greater than the threshold temperature.

## Description

### CROSS-REFERENCE TO RELATED APPLICATION

This application claims the benefit of co-pending U.S. Provisional Patent Application Serial No. 63/506,484, filed June 6, 2023, for "Additive Manufacturing Apparatuses Including Energy Emitters For Localized Heating," which is hereby incorporated by reference in its entirety including the drawings.

### TECHNICAL FIELD

The present specification generally relates to additive manufacturing apparatuses and, more specifically, to additive manufacturing apparatuses performing localized heating of a build plane.

### BACKGROUND

Additive manufacturing apparatuses may be utilized to build an object from a build material, such as organic or inorganic powders, in a layer-wise manner. An example of additive manufacturing processes includes laser powder bed fusion systems for raising the temperature of individual layers of build material to result in melting and/or fusing of the build material. The energy output required to melt and/or fuse the build material requires expensive laser devices to be utilized. In some embodiments, the powder bed on which the build material is deposited may be pre-heated to increase the temperature of the build material prior to being subjected to the laser device. However, existing devices suitable for pre-heating the powder bed are inefficient, indiscriminate in their application of pre-heat energy, and typically result in excessive waste heat.

Accordingly, there is a need for additive manufacturing apparatuses that include a more efficient device capable of pre-heating the material to be fused thus enabling a more economical and energy efficient additive manufacturing process.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 schematically depicts a side view of an additive manufacturing apparatus including a printing assembly, according to one or more embodiments shown and described herein;
FIG. 2 schematically depicts a side view of the printing assembly of FIG. 1, according to one or more embodiments shown and described herein;
FIG. 3 schematically depicts a side view of an embodiment of a printing assembly and a recoat assembly, according to one or more embodiments shown and described herein;
FIG. 4 schematically depicts a side view of an energy emitter of the printing assembly of FIG. 1, according to one or more embodiments shown and described herein;
FIG. 5 schematically depicts a side view of another embodiment of an energy emitter, according to one or more embodiments shown and described herein; and
FIG. 6 depicts a flowchart of a method for operating the additive manufacturing apparatus.

### DETAILED DESCRIPTION

Embodiments described herein are directed to printing assemblies that include one or more print modules and one or more energy emitters. The printing assembly can be used in conjunction with an additive manufacturing apparatus to pre-heat build material being deposited or already deposited onto a build platform. This process is more energy efficient than existing systems and methods in which an entire build platform is pre-heated. Rather, only specific target areas of the build material may be pre-heated so as to reduce the energy required by a fusing beam emitter to melt or fuse the build material to form a work component. As such, fusing beam emitters providing a lower output may be utilized to reduce cost. The energy emitters can also be used in a post-heating manner applied after the fusing beam has melted or fused the build material so as to better control resulting target microstructural formation. Additionally, the energy emitter is configured to steer the emitted emission to direct the emission to only the particular target areas desired for pre- or post-heating, which may result in melting/fusing.

A printing assembly for an additive manufacturing apparatus includes an energy emitter configured to steer one or more emissions across a build platform to raise a temperature of a build material on the build platform from an initial temperature to a first temperature, the first temperature being less than a threshold temperature set by material dependent metallurgical properties, and a fusing beam emitter configured to generate one or more laser beams to raise the temperature of the build material on the build platform from the first temperature to a second temperature, the second temperature being greater than the threshold temperature. Various embodiments of the apparatuses and methods for pre-heating the build material either prior to being deposited onto the build plane or subsequent to being deposited onto the build plane are described in more detail herein. Whenever possible, the same reference numerals will be used throughout the drawings to refer to the same or like parts.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

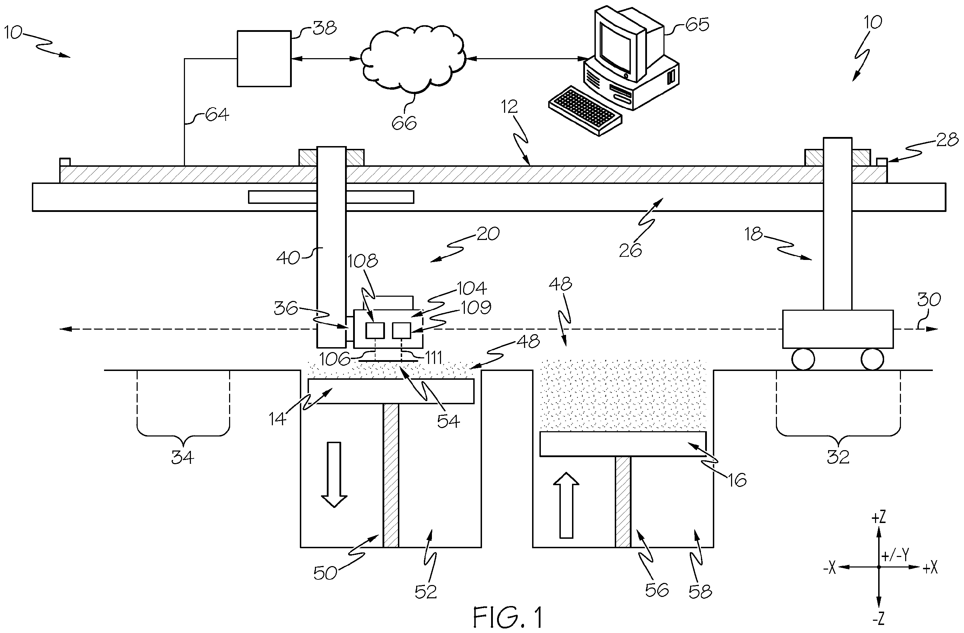

Referring now to FIG. 1, an additive manufacturing apparatus 10 is illustrated according to one or more embodiments described herein. The additive manufacturing apparatus 10 may generally include a build platform 14, a supply platform 16, a recoat assembly 18, and a printing assembly 20. The recoat assembly 18 and the printing assembly 20 are coupled to a rail 26 of the additive manufacturing apparatus 10 and are configured to translate along the rail 26 in response to an actuation of a first actuator assembly 28. The first actuator assembly 28 may be constructed to facilitate independent control of the recoat assembly 18 and the printing assembly 20 along a working axis 30 of the manufacturing apparatus 10. The working axis 30 is also referred to herein as the "longitudinal axis" (i.e., extending along the +/- X axis of the coordinate axes as depicted in the figures). This allows for the recoat assembly 18 and the printing assembly 20 to traverse the working axis 30 of the additive manufacturing apparatus 10 in the same direction and/or in opposite directions and for the recoat assembly 18 and the printing assembly 20 to traverse the working axis 30 of the additive manufacturing apparatus 10 at different speeds and/or the same speed.

In the embodiments described herein, the build platform 14, the supply platform 16, the recoat assembly 18, and the printing assembly 20 are positioned in series along the working axis 30 of the additive manufacturing apparatus 10 between a home position 34 of the printing assembly 20, located proximate an end of the working axis 30 in the -X direction, and a home position 32 of the recoat assembly 18, located proximate an end of the working axis 30 in the +X direction. In embodiments, the build platform 14 is positioned between the home position 34 of the printing assembly 20 and the supply platform 16 along the working axis 30 of the manufacturing apparatus 10.

In embodiments, a second actuator assembly 36 may be constructed to facilitate independent control of the printing assembly 20 along a latitudinal axis (i.e., extending along the +/- Y axis of the coordinate axes as depicted in the figures), which is generally perpendicular to the longitudinal axis (i.e., the working axis 30). The first actuator assembly 28 and the second actuator assembly 36 are generally referred to as a print module position control assembly. That is, the print module position control assembly includes the first actuator assembly 28 configured to move the printing assembly 20 along the longitudinal axis and the second actuator assembly 36 configured to move the printing assembly 20 along a latitudinal axis. The print module position control assembly may be controlled via signals generated by a control system 38 such as an electronic control unit. The electronic control unit may include a processor and a non-transitory computer readable memory.

The printing assembly 20 comprises, among other features, a support bracket 40 and one or more print modules 104. The support bracket 40 is movably coupled to the rail 26 and the first actuator assembly 28 of the additive manufacturing apparatus 10 while the print module 104 is movably coupled to the support bracket 40 via the second actuator assembly 36.

As will be described below, the additive manufacturing apparatus 10 is used to scan a build plane 54 of one or more workpieces (not shown) positioned within the additive manufacturing apparatus 10 with one or more electromagnetic radiation beams, hereinafter referred to as one or more laser beams 106 emanating from the print module 104. Moreover, the additive manufacturing apparatus 10 is used to additively print (i.e., using an additive manufacturing technique(s)) one or more layers on each scanned workpiece.

As used herein, the terms "additively manufacturing" or "additive manufacturing techniques or processes" refer to manufacturing processes in which successive layers of material are deposited on top of each other to build-up, layer-by-layer, a three-dimensional component. The successive layers are melted or fused together to form a monolithic or integral component.

In several embodiments, the additive manufacturing apparatus 10 uses a powder bed fusion (PBF) technique, such as direct metal laser melting (DMLM) or directed metal laser sintering (DMLS). In such embodiments, layers of the workpiece are additively printed by melting or fusing a first layer of a build material 48, such as metal powder, to the build plane 54, sintering or fusing a second layer of powder on top of the first layer, and so on. However, in some embodiments, the workpiece may be additively printed by melting or fusing a single layer of build material 48 to the build plane 54. Furthermore, in alternative embodiments, the additive manufacturing apparatus 10 may use any other suitable additive manufacturing techniques or processes.

It should be appreciated that the temperature of the build material 48 must be increased in excess of a threshold temperature for melting or fusing of the layer(s) to occur. In embodiments, as described in more detail herein, the build material 48 may be pre-heated either after deposition onto the build platform 14, prior to deposition, or during deposition onto the build platform 14 to raise the temperature of the build material 48, which reduces the necessary energy output required by an emitting device to melt/fuse the build material 48. Accordingly, an emitting device having a lower output may be utilized as opposed to an emitting device delivering a greater energy output as would be required if the build material 48 was not pre-heated.

The recoat assembly 18 is constructed to facilitate a distribution of the build material 48 over the build platform 14 and the supply platform 16. The build platform 14 is coupled to a build platform actuator 50 to facilitate raising and lowering the build platform 14 relative to the working axis 30 of the additive manufacturing apparatus 10 in a vertical direction (i.e., a direction parallel to the +/- Z axis of the coordinate axes depicted in the figures). The build platform 14 and the build platform actuator 50 are positioned in a build receptacle 52 located below the working axis 30 (i.e., in the -Z direction of the coordinate axes depicted in the figures) of the manufacturing apparatus 10. During operation of the manufacturing apparatus 10, the recoat assembly 18 fills the build receptacle 52 with build material 48 until the build material 48 forms a build plane 54. Next, the recoat assembly 18 spreads a layer of the build material 48 across the build plane 54. The layer of build material 48 is then melted or fused along the build plane 54 using the laser beam(s) 106, after pre-heating of the build material 48, to form a first layer(s) of a workpiece. Thereafter, the build platform 14 is lowered (e.g., as indicated by the arrow) before the recoat assembly 18 spreads another layer of the build material 48 across the build plane 54. This layer may then be melted or fused to the first layer(s) using the one or more laser beams 106 to form a second layer(s) of the workpiece and so on.

Still referring to FIG. 1, the supply platform 16 is coupled to a supply platform actuator 56 to facilitate raising and lowering the supply platform 16 relative to the working axis 30 of the additive manufacturing apparatus 10 in a vertical direction (i.e., a direction parallel to the +/- Z axis of the coordinate axes depicted in the figures). The supply platform 16 and the supply platform actuator 56 are positioned in a supply receptacle 58 located below the working axis 30 (i.e., in the -Z direction of the coordinate axes depicted in the figures) of the manufacturing apparatus 10. During operation of the manufacturing apparatus 10, the supply platform 16 is raised relative to the supply receptacle 58 and towards the working axis 30 of the additive manufacturing apparatus 10 by action of the supply platform actuator 56 after a layer of build material 48 is distributed from the supply platform 16 to the build platform 14.

The printing assembly 20 is constructed to direct one or more laser beams 106 over the layer of build material 48 on the build platform 14 as the printing assembly 20 traverses the build platform 14 along the working axis 30 of the manufacturing apparatus 10. In general, the print module 104 generates and directs the one or more laser beams 106 at the build plane 54, which allows the build material 48 spread across the build platform 14 to be melted/fused.

As shown, in several embodiments, each print module 104 includes a fusing beam emitter 108. Although referred to herein as the fusing beam emitter 108, it should be understood that the fusing beam emitter 108 may form the workpiece in any other suitable manner such as, for example, melting, as described herein. More specifically, as discussed in further detail below, the fusing beam emitter 108 emits one or more laser beams 106 which is ultimately directed at a specific location on the build plane 54. In this respect, when additively printing the workpiece, the print module 104 scans the laser beam 106 over the portion of the build plane 54 at which it desires to melt or fuse the build material 48 to form a layer(s) of the workpiece. Moreover, as discussed in further detail below, each print module 104 may include one or more components configured to collimate, focus, and direct the emitted laser beam 106. In embodiments, the fusing beam emitter 108 includes one or more collimators, one or more beam homogenizers, one or more turning optics, one or more projection elements (e.g., a DMD), one or more imaging optics, and one or more consolidating optics each sequentially optically coupled to one another.

As described herein, the temperature of the build material 48 may be heated prior to melting or fusing to reduce the energy required by the fusing beam emitter 108 to raise the temperature of the build material 48 in excess of the threshold temperature required for melting/fusing. For example, in embodiments, the printing assembly 20 is constructed to direct one or more emissions 111 over the build platform 14 in front of, i.e., upstream, of the laser beam 106 emitted by the fusing beam emitter 108 as the printing assembly 20 traverses the build platform 14 along the working axis 30 of the manufacturing apparatus 10. In general, the print module 104 generates and directs the one or more emissions 111 at the build plane 54, which increases a temperature of the build material 48 across the build platform 14 closer to the threshold temperature set by material dependent metallurgical properties, which, in some embodiments, is a temperature at which sintering occurs prior to being subjected to the laser beam 106. It should be appreciated that the threshold temperature is approximately one-half the melting temperature. For example, when the build material 48 is Iconel 718^{™}, the threshold temperature at which the build material 48 sinters is 725°C (Celsius) and the melting temperature is 1300°C. Accordingly, the first temperature to which the build material 48 is pre-heated is approximately 600°C, which is less than the threshold temperature, and the second temperature is greater than 1300°C to exceed the melting temperature.

As shown in FIG. 1, in several embodiments, each print module 104 includes an energy emitter 109. More specifically, as discussed in further detail below, the energy emitter 109 emits one or more emissions 111 which is ultimately directed at a specific location on the build plane 54 in front of the laser beams 106. In this respect, when additively printing the workpiece, the print module 104 scans the emissions 111 over the portion of the build plane 54 at which it desires to melt or fuse the build material 48 prior to being subjected by the laser beam 106 to form a layer(s) of the workpiece. Moreover, as discussed in further detail below, each print module 104 may include one or more components configured to collimate, focus, and direct the emitted emissions 111.

The additive manufacturing apparatus 10 may include any suitable number of print modules 104. For example, in the illustrated embodiment, the additive manufacturing apparatus 10 includes one print module 104. However, in alternative embodiments, the additive manufacturing apparatus 10 may include two print modules 104 or three or more print modules 104. The multiple print modules 104 can be arranged in a variety of configurations including linearly and/or staggered along the X and/or Y axis directions.

Still referring to FIG. 1, the additive manufacturing apparatus 10 may further include a control system 38 communicatively coupled to the first actuator assembly 28, the second actuator assembly 36, the recoat assembly 18, and/or the printing assembly 20. In embodiments, the control system 38 is coupled to the additive manufacturing apparatus 10 via a communication conduit 64, however, it should be understood that in other embodiments the control system 38 may be communicatively coupled to the additive manufacturing apparatus 10 via various other means or systems, such as, for example, through a wireless connection. The control system 38, which may also be referred to as an electronic control unit, comprises a processor and a non-transitory memory that includes computer readable and executable instructions stored thereon. Any action of the manufacturing apparatus 10, including the actions described herein, may be caused to be performed by the computer readable and executable instructions stored in the non-transitory memory of the control system 38 when executed by the processor of the control system 38. For example, one or more actuators may be actuated by the computer readable and executable instructions stored in the non-transitory memory of the control system 38 when executed by the processor of the control system 38 to cause the printing assembly 20 to operate.

In embodiments, the control system 38 may be further communicatively coupled to a computing device 65, optionally via a network 66, or directly via a communication link such as a wired or wireless connection. The computing device 65 may be configured to carry out processes such as generating executable instruction for building a component with the manufacturing apparatus 10, such as by implementing CAD or other related three-dimensional drafting and rendering systems as well as a slicing engine or the like.

Moreover, in some embodiments, the computing device 65 may be communicatively coupled to the print module 104 via the communication conduit 64. As such, the computing device 65 may be configured to control the operation of print module 104 such that one or more laser beams 106 and one or more emissions 111 are generated, focused, and scanned across the build plane 54. The computing device 65 also receives data associated with the location(s) of the laser beam(s) 106 and the emission(s) 111 relative to the build platform 14 from the print module 104 as the laser beam(s) 106 and the emission(s) 111 are scanned across the build plane 54.

The configuration of the additive manufacturing apparatus 10 described above and shown in FIG. 1 is provided only to place the present subject matter in an exemplary field of use. Thus, the present subject matter may be readily adaptable to any manner of additive manufacturing machine, including additive manufacturing machines that use different additive manufacturing techniques.

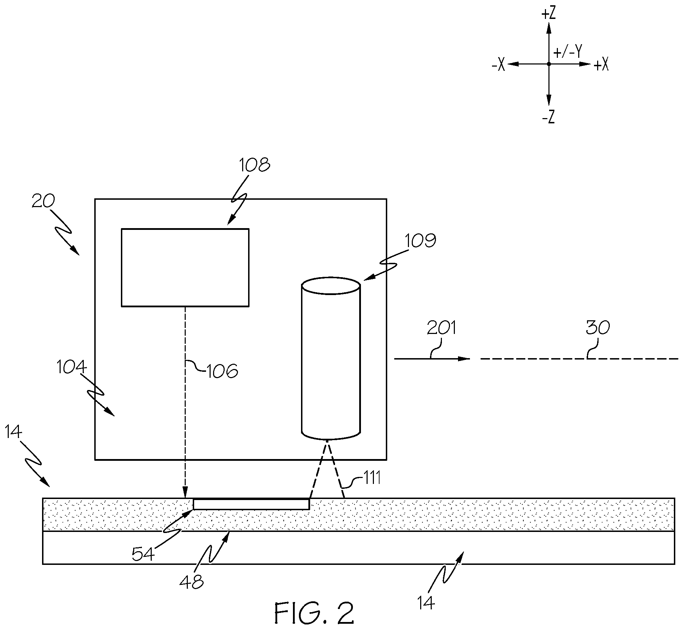

Referring now to FIG. 2, operation of the printing assembly 20, which includes the printing module 104, moving along the working axis 30 in the direction of arrow 201, i.e., the +X direction of the coordinate axes, is shown. Specifically, FIG. 2 depicts the printing module 104 including the energy emitter 109 spaced apart from the fusing beam emitter 108 in the +X direction. Accordingly, once the build material 48 is deposited onto the build platform 14 by the recoat assembly 18 (FIG. 1), the energy emitter 109 scans the emission 111 across the build material 48 on the build platform 14 in front of the fusing beam emitter 108. The energy emitter 109 may include any suitable device for raising a temperature of the build material 48 from an initial temperature when deposited onto the build platform 14 by the recoat assembly 18 such as, for example, a microwave emitter, an inductive heater, an electron beam emitter, a laser device, a radiofrequency emitter, and the like. As described herein, the build material 48 melts/fuses when raised above a threshold temperature. Accordingly, the energy emitter 109 is configured to emit the emission 111 to raise the temperature of the build material 48 from the initial temperature to a first temperature less than the threshold temperature. As discussed herein, the threshold temperature is a temperature at which the build material 48 begins to sinter. In embodiments, the first temperature is between about 1% and about 3% less than the threshold temperature. In other embodiments, the first temperature is between about 3% and about 5% less than the threshold temperature. In other embodiments, the first temperature is between about 5% and about 7% less than the threshold temperature. In other embodiments, the first temperature is between about 7% and about 9% less than the threshold temperature.

In embodiments, the energy emitter 109 extends along a width direction of the build platform 14, i.e., in the Y axis of the coordinate axis. As described herein, although referring to a single emission 111, the pre-heating energy emitter 109 is configured to emit a plurality of emissions 111. Additionally, the energy emitter 109 is configured to direct the plurality of emissions 111 onto specific locations of the build plane 54 where melting/fusing is desired to from the workpiece. The energy emitter 109 may be configured to direct the emissions 111 in any suitable manner such as, for example, by utilizing any number of mirrors or other components to direct the emissions 111. In other embodiment, the energy emitter 109 utilizes beam steering, which may also be referred to as beamforming, to control a direction at which the emissions 111 are directed from the energy emitter 109 and the particular location at which the emissions 111 contact the build plane 54. The concept of beam steering is disclosed in more detail herein. As described herein, the energy emitter 109 is configured to steer the one or more emissions 111 in the width direction across the build platform 14.

As the printing module 104 moves along the working axis 30 in the direction of arrow 201 and the energy emitter 109 moves in unison with the fusing beam emitter 108, the fusing beam emitter 108 subsequently scans the build plane 54 and emits the laser beams 106 as a subsequent energy emission onto the portions of the build material 48 previously subjected to the emission 111. As shown, a distance between the 106 fusing beam emitter 108 and the home position 32 is less than a distance between the energy emitter 109 and the home position 32. Accordingly, the fusing beam emitter 108 raises the temperature of the build material 48 from the first temperature, resulting from being subjected to the emission 111, to a second temperature. The second temperature is greater than the threshold temperature set by material dependent metallurgical properties and/or at which the build material 48 melts/fuses. In embodiments, the second temperature is between about 1% to about 3% greater than the melting temperature of the build material 48. In other embodiments, the second temperature is between about 3% and about 5% greater than the melting temperature of the build material 48. In other embodiments, the second temperature is between about 5% and about 7% greater than the melting temperature of the build material 48. In other embodiments, the second temperature is between about 7% and about 9% greater than the melting temperature of the build material 48. As the amount of energy required to raise the temperature of the build material 48 from the first temperature to the second temperature is less than the amount of energy required to raise the temperature of the build material 48 from the initial temperature to the second temperature, the power provided by the fusing beam emitter 108 may be reduced as compared to the power of a fusing beam emitter that would be required if the temperature of the build material 48 was not previously raised to the first temperature.

Although FIG. 2 depicts an embodiment in which the energy emitter 109 is provided on the printing module 104 of the printing assembly 20, it should be appreciated that the energy emitter 109 may be located at any other suitable location for heating the build material 48 on the build platform 14. For example, the energy emitter 109 may be located on the recoat assembly 18, or any other suitable structure movable in unison or independent of the printing module 104. Further, it should be appreciated that after the emitting emitters 109 have pre-heated the build material 48 to the first temperature, the temperature profile of the build material 48 may be controlled such that the desired microstructure and subsequent mechanical properties are achieved. In embodiments, as described in more detail herein, the build material 48 may be post-heated by the energy emitters 109 to raise the temperature of the build material 48 in excess of the second temperature to achieve the appropriate temperature profile to achieve the desired properties.

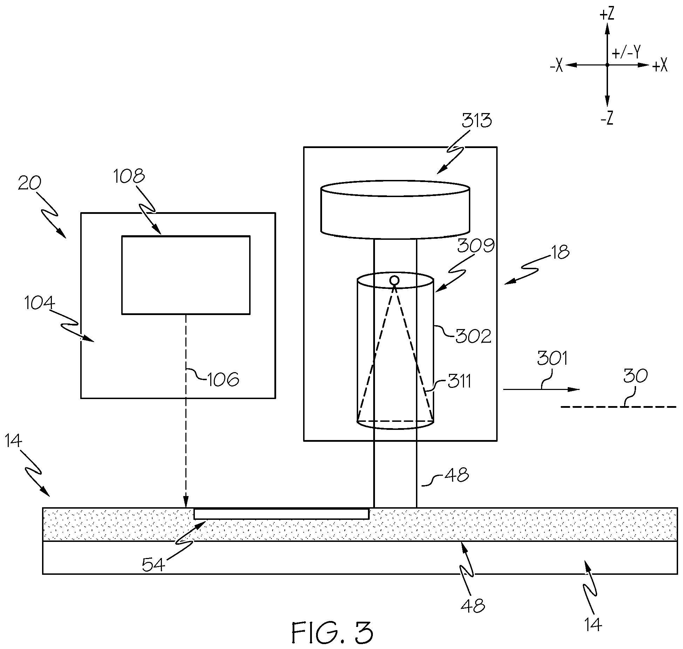

Referring now to FIG. 3, another embodiment is depicted in which the build material 48 is pre-heated prior to being deposited onto the build platform 14 rather than being pre-heated after the build material 48 is deposited onto the build platform 14, as discussed herein and depicted in FIG. 2. It should be appreciated that the embodiment depicted in FIG. 3 is similar to the embodiment depicted in FIGS. 1 and 2 and, thus, like reference numerals will be used where appropriate. Specifically, in the embodiment depicted in FIG. 3, the recoat assembly 18 is shown spaced apart from the printing assembly 20. As with the embodiment depicted in FIGS. 1 and 2, the fusing beam emitter 108 is provided on the print module 104 of the printing assembly 20. However, an energy emitter 309, similar to the energy emitter 109 (FIG. 2), is provided on the recoat assembly 18, as opposed to the printing assembly 20.

The recoat assembly 18 includes a powder hopper 313, which deposits the build material 48 that flows through one or more conduits 302 and toward the build platform 14. In embodiments, the recoat assembly 18 includes a one or more conduits 302 extending an entire width of the recoat assembly 18 across a width of the build platform 14, i.e., in the Y axis of the coordinate axis. Accordingly, the build material 48 may be deposited onto any location of the build platform 14 as the recoat assembly 18 moves along the working axis 30. In embodiments, the recoat assembly 18 includes a plurality of conduits 302 linearly arranged along the entire width of the recoat assembly 18 across the width of the build platform 14. The one or more conduits 302 may each include an induction heater to form an energy field to pre-heat the build material 48 flowing through each of the conduits 302. The energy emitter 309 is configured to emit one or more emissions 311 toward the build platform 14. More particularly, the energy emitter 309 is configured to direct, i.e., steer, the emissions 311 into the particular conduit(s) 302 or particular locations of the conduit(s) 302 through which build material 48 flows. As such, the emissions 311 are directed to the particular build material 48 that is desired to be melted/fused by the fusing beam emitter 108. Thus, build material 48 that is not intended to be melted/fused, is not subjected to the emissions 311 while passing through the conduit(s) 302. In doing so, the temperature of the build material 48 is raised from an initial temperature to a first temperature less than the threshold temperature at which the build material 48 is sintered.

As depicted in FIG. 3, the recoat assembly 18 moves in the direction of arrow 301, i.e., the +X direction of the coordinate axes. Thus, the build material 48 is deposited onto the build platform 14 as the recoat assembly 18 moves in the direction of arrow 301. Thereafter, the printing assembly 20 moves in the direction of arrow 301 behind the recoat assembly 18. As described herein, the fusing beam emitter 108 subsequently scans the build plane 54 and emits the laser beams 106 onto the portions of the build material 48 previously subjected to the emissions 311. Accordingly, the fusing beam emitter 108 increases the temperature of the build material 48 from the first temperature, resulting from being subjected to the emission 311, to a second temperature. The second temperature is greater than the threshold temperature.

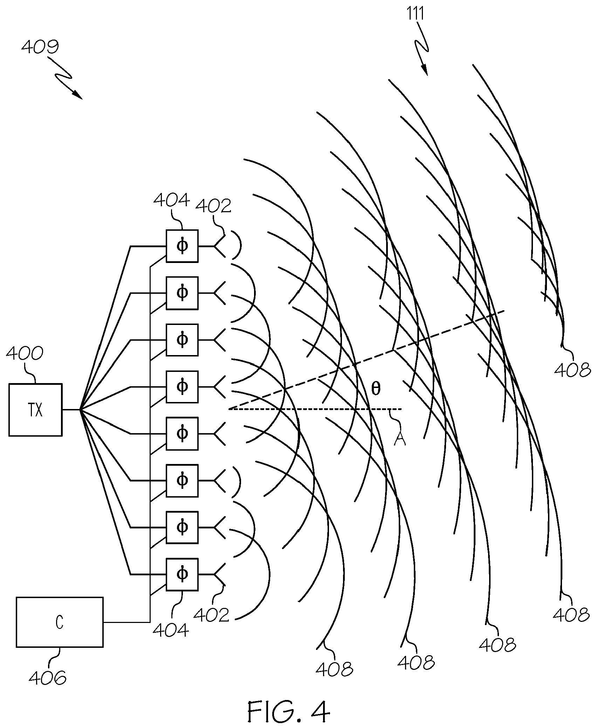

Referring now to FIG. 4, an embodiment of an energy emitter 409 is depicted including a power supply 400, a plurality of antenna elements 402 powered by the power supply 400, a plurality of phase shifters 404 associated with a respective one of each of the antenna elements 402, and a controller 406, such as, for example, the control system 38 depicted in FIG. 1. The feed current for each antenna element 402 passes through a respective one of the phase shifters 404 and is controlled by the controller 406. A wavefront 408 is emitted by each of the antenna elements 402. The individual wavefronts 408 are spherical, but cooperate in front of the antenna elements 402 to form a plane wave or, as referred to herein, the emission 111. The phase shifters 404 progressively delay the wavefronts 408 such that each antenna element 402 emits a respective wavefront 408 later than an antenna element 402 immediately below. This causes the resulting plane wave to be directed at an angle θ relative to an axis A of the antenna elements 402 extending in the vertical direction (i.e., +/- Z direction of the coordinate axis depicted in FIG. 1). By changing the phase shift of each wavefront 408, the controller 406 may instantly change the angle θ of the wavefront 408 and thus the emission 111 resulting from the combined wavefronts 408.

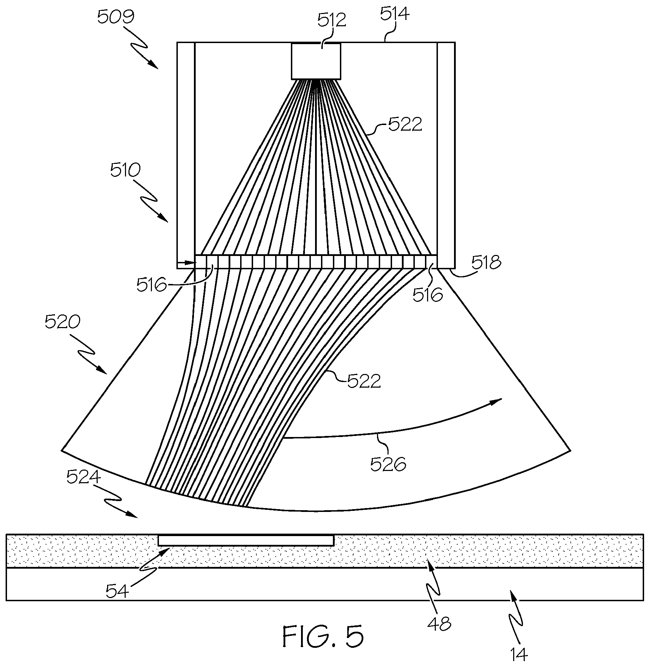

Referring now to FIG. 5, another embodiment of an energy emitter 509 is depicted. The energy emitter 509 includes an emitter array 510, a projector 512 provided at a first end 514 of the emitter array 510, and a plurality of steering elements 516 provided at an opposite second end 518 of the emitter array 510 proximate a field of view 520. In embodiments, the emitter array 510 includes a linear transducer. In embodiments, the steering elements 516 includes piezoelectric elements or any other suitable devices for emitting a beam 522. The projector 512 emits a plurality of beams 522 toward each of the steering elements 516, which are then steered based on a time shift or time delay of each of the steering elements 516. For example, in instances in which the steering elements 516 on the left of the emitter array 510 experience a greater time delay than the steering elements 516 on the right of the emitter array 510, a cumulative of the beams 522 emitted from the steering elements 516 will be directed to the left of the emitter array 510 and toward the build platform 14 at a localized heated area 524 corresponding to a portion of the build material 48 to be melted/fused. It should be appreciated that the time delay of the steering elements 516 may be altered at the speed of light, such that the beams 522 may be directed to a plurality of locations along the build platform 14 nearly simultaneously. As such, the beams 522 may swing in the direction of arrow 526 to melt/fuse another portion of the build material 48.

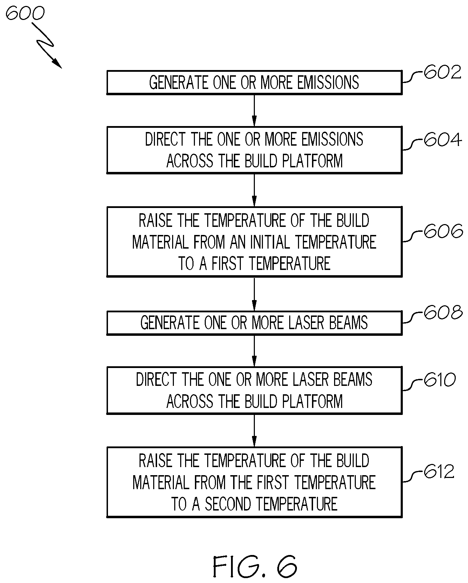

Referring now to FIG. 6, and with reference to FIG. 2, a method 600 for operating for operating the additive manufacturing apparatus 10 is disclosed. Specifically, at step 602, the one or more emissions 111 are generated by the energy emitter 109. At step 604, the one or more emissions 111 are directed across the build platform 14. At step 606, the temperature of the build material 48 on the build platform 14 is raised from the initial temperature to the first temperature. As described herein, the first temperature is less than a threshold temperature set by material dependent metallurgical properties. At step 608, the one or more laser beams 106 are generated by the fusing beam emitter 108. At step 610, the one or more laser beams 106 are directed across the build platform 14. At step 612, the temperature of the build material 48 on the build platform 14 is raised from the first temperature to the second temperature. As described herein, the second temperature is greater than the threshold temperature.

From the above, it is to be appreciated that defined herein is a printing assembly for an additive manufacturing apparatus including an energy emitter configured to steer one or more emissions across a build platform to raise a temperature of a build material on the build platform from an initial temperature to a first temperature, the first temperature being less than a threshold temperature set by material dependent metallurgical properties, and a fusing beam emitter configured to generate one or more laser beams to raise the temperature of the build material on the build platform from the first temperature to a second temperature, the second temperature being greater than the threshold temperature. In other embodiments, the energy emitter is provided on a recoat assembly separate and independently movable from the printing assembly. In such embodiments, the energy emitter is configured to pre-heat the build material during deposition from the recoat assembly prior to being deposited onto the build platform. It can also be used to post-heat the deposited material to achieve the appropriate temperature profile of the build material.

Further aspects of the embodiments described herein are provided by the subject matter of the following clauses:
A printing assembly for an additive manufacturing apparatus comprising: an energy emitter configured to steer one or more emissions across a build platform to raise a temperature of a build material on the build platform from an initial temperature to a first temperature, the first temperature being less than a threshold temperature set by material dependent metallurgical properties; and a fusing beam emitter configured to generate one or more laser beams to raise the temperature of the build material on the build platform from the first temperature to a second temperature, the second temperature being greater than the threshold temperature.

The printing assembly of any preceding clause, wherein the printing assembly is movable along a working axis from a home position, the energy emitter spaced apart from the fusing beam emitter along the working axis.

The printing assembly of any preceding clause, wherein the fusing beam emitter moves in unison with the energy emitter, and wherein a distance between the fusing beam emitter and the home position is less than a distance between the energy emitter and the home position.

The printing assembly of any preceding clause, wherein the energy emitter comprises at least one of a microwave emitter, an inductive heater, an electron beam emitter, a laser device, or a radiofrequency emitter.

The printing assembly of any of any preceding clause, wherein the energy emitter comprises: a power supply; a plurality of antenna elements powered by the power supply to emit a wavefront; a plurality of phase shifters, each phase shifter associated with a respective antenna element for delaying the wavefront of the respective antenna element; and a controller configured to control a feed current for each antenna element passing through a respective phase shifter.

The printing assembly of any of any preceding clause, wherein the energy emitter comprises: an emitter array; a projector provided at a first end of the emitter array; and a plurality of steering elements provided at an opposite second end of the emitter array proximate a field of view, each steering element receiving a respective beam from the projector and controlling a direction of the beam toward the build material.

The printing assembly of any of any preceding clause, wherein the energy emitter extends in a width direction along a width of the printing assembly.

The printing assembly of any preceding clause, wherein the energy emitter is configured to steer the one or more emissions in a width direction across the build platform.

An additive manufacturing apparatus comprising: a build platform supporting a build material, the build material defining a build plane on the build platform; a recoat assembly including an energy emitter configured to generate one or more emissions to raise a temperature of the build material during deposition onto the build platform by the recoat assembly from an initial temperature to a first temperature, the first temperature being less than a threshold temperature set by material dependent metallurgical properties; and a printing assembly including a fusing beam emitter configured to generate one or more laser beams to raise the temperature of the build material on the build platform from the first temperature to a second temperature, the second temperature being greater than the threshold temperature.

The additive manufacturing apparatus of any preceding clause, wherein the recoat assembly and the printing assembly move independent of one another along a working axis.

The additive manufacturing apparatus of any preceding clause, wherein the energy emitter comprises at least one of a microwave emitter, an inductive heater, an electron beam emitter, a laser device, or a radiofrequency emitter.

The additive manufacturing apparatus of any preceding clause, wherein recoat assembly comprises one or more conduits through which the build material passes when being deposited onto the build platform.

The additive manufacturing apparatus of any preceding clause, wherein the energy emitter emits an emission into the one or more conduits to raise the temperature of at least a portion of the build material from the initial temperature to the first temperature.

The additive manufacturing apparatus of any preceding clause, wherein the energy emitter is configured to steer the one or more emissions in a width direction across the build platform.

A method comprising: generating one or more emissions with an energy emitter; directing the one or more emissions across a build platform to raise a temperature of a build material on the build platform from an initial temperature to a first temperature, the first temperature being less than a threshold temperature set by material dependent metallurgical properties; generating one or more laser beams with a fusing beam emitter; and directing the one or more laser beams to raise the temperature of the build material on the build platform from the first temperature to a second temperature, the second temperature being greater than the threshold temperature.

The method of any preceding clause, further comprising moving the fusing beam emitter and the energy emitter in unison along a working axis, wherein the energy emitter is spaced apart from the fusing beam emitter along the working axis.

The method of any preceding clause, wherein the energy emitter comprises at least one of a microwave emitter, an inductive heater, an electron beam emitter, a laser device, or a radiofrequency emitter.

The method of any preceding clause, wherein the energy emitter comprises: a power supply; a plurality of antenna elements powered by the power supply to emit a wavefront; a plurality of phase shifters, each phase shifter associated with a respective antenna element for delaying the wavefront of the respective antenna element; and a controller configured to control a feed current for each antenna element passing through a respective phase shifter.

The method of any preceding clause, wherein the energy emitter comprises: an emitter array; a projector provided at a first end of the emitter array; and a plurality of steering elements provided at an opposite second end of the emitter array proximate a field of view, each steering element receiving a respective beam from the projector and controlling a direction of the beam toward the build material.

The method of any preceding clause, further comprising steering the one or more emissions in a width direction across the build platform; and emitting a subsequent energy emission to the build material to increase the temperature of the build material from the second temperature.

A controller comprising a processor and a non-transitory memory storing computer code which, when executed by the processor, causes the processor to: instruct an energy emitter to generate one or more emissions; instruct the energy emitter to direct the one or more emissions across a build platform to raise a temperature of a build material on the build platform from an initial temperature to a first temperature, the first temperature being less than a threshold temperature set by material dependent metallurgical properties; instruct a fusing beam emitter to generate one or more laser beams; and instruct the fusing beam emitter to direct the one or more laser beams to raise the temperature of the build material on the build platform from the first temperature to a second temperature, the second temperature being greater than the threshold temperature.

The controller of any preceding clause, wherein the processor is further configured to instruct the fusing beam emitter and the energy emitter to move in unison along a working axis, wherein the energy emitter is spaced apart from the fusing beam emitter along the working axis.

The controller of any preceding clause, wherein the energy emitter comprises at least one of a microwave emitter, an inductive heater, an electron beam emitter, a laser device, or a radiofrequency emitter.

The controller of any preceding clause, wherein the energy emitter comprises: a power supply; a plurality of antenna elements powered by the power supply to emit a wavefront; a plurality of phase shifters, each phase shifter associated with a respective antenna element for delaying the wavefront of the respective antenna element; and the controller is further configured to control a feed current for each antenna element passing through a respective phase shifter.

The controller of any preceding clause, wherein the energy emitter comprises: an emitter array; a projector provided at a first end of the emitter array; and a plurality of steering elements provided at an opposite second end of the emitter array proximate a field of view, each steering element receiving a respective beam from the projector and controlling a direction of the beam toward the build material.

The controller of any preceding clause, wherein the processor is further configured to instruct the plurality of steering elements to steer the one or more emissions in a width direction across the build platform; and instruct the energy emitter to emit a subsequent energy emission to the build material to increase the temperature of the build material from the second temperature.

It will be apparent to those skilled in the art that various modifications and variations can be made to the embodiments described herein without departing from the scope of the claimed subject matter. Thus, it is intended that the specification cover the modifications and variations of the various embodiments described herein provided such modification and variations come within the scope of the appended claims and their equivalents.

## Claims

1. A printing assembly (20) for an additive manufacturing apparatus (10) comprising:
an energy emitter (109) configured to steer one or more emissions (111) across a build platform (14) to raise a temperature of a build material (48) on the build platform (14) from an initial temperature to a first temperature, the first temperature being less than a threshold temperature set by material dependent metallurgical properties; and
a fusing beam emitter (108) configured to generate one or more laser beams (106) to raise the temperature of the build material (48) on the build platform (14) from the first temperature to a second temperature, the second temperature being greater than the threshold temperature.

2. The printing assembly (20) of claim 1, wherein the printing assembly (20) is movable along a working axis (30) from a home position (32), the energy emitter (109) spaced apart from the fusing beam emitter (108) along the working axis (30).

3. The printing assembly (20) of claim 2, wherein the fusing beam emitter (108) moves in unison with the energy emitter (109), and wherein a distance between the fusing beam emitter (108) and the home position (32) is less than a distance between the energy emitter (109) and the home position (32).

4. The printing assembly (20) of any one of claims 1-3, wherein the energy emitter (109) comprises at least one of a microwave emitter, an inductive heater, an electron beam (522) emitter, a laser device, or a radiofrequency emitter.

5. The printing assembly (20) of any one of claims 1-4, wherein the energy emitter (109) comprises:
a power supply (400);
a plurality of antenna elements (402) powered by the power supply (400) to emit a wavefront (408);
a plurality of phase shifters (404), each phase shifter associated with a respective antenna element (402) for delaying the wavefront (408) of the respective antenna element (402); and
a controller (406) configured to control a feed current for each antenna element (402) passing through a respective phase shifter.

6. The printing assembly (20) of any one of claims 1-5, wherein the energy emitter (109) comprises:
an emitter array (510);
a projector (512) provided at a first end (514) of the emitter array (510); and
a plurality of steering elements (516) provided at an opposite second end (518) of the emitter array (510) proximate a field of view (520), each steering element receiving a respective beam (522) from the projector (512) and controlling a direction of the beam (522) toward the build material (48).

7. The printing assembly (20) of any one of claims 1-6, wherein the energy emitter (109) extends in a width direction along a width of the printing assembly (20).

8. The printing assembly (20) of claim 7, wherein the energy emitter (109) is configured to steer the one or more emissions (111) in a width direction across the build platform (14).

9. A method comprising:
generating one or more emissions (111) with an energy emitter (109);
directing the one or more emissions (111) across a build platform (14) to raise a temperature of a build material (48) on the build platform (14) from an initial temperature to a first temperature, the first temperature being less than a threshold temperature set by material dependent metallurgical properties;
generating one or more laser beams (106) with a fusing beam emitter (108); and
directing the one or more laser beams (106) to raise the temperature of the build material (48) on the build platform (14) from the first temperature to a second temperature, the second temperature being greater than the threshold temperature.

10. The method of claim 9, further comprising moving the fusing beam emitter (108) and the energy emitter (109) in unison along a working axis (30), wherein the energy emitter (109) is spaced apart from the fusing beam emitter (108) along the working axis (30).

11. The method of claim 9 or claim 10, wherein the energy emitter (109) comprises at least one of a microwave emitter, an inductive heater, an electron beam (522) emitter, a laser device, or a radiofrequency emitter.

12. The method of any one of claims 9-11, wherein the energy emitter (109) comprises:
a power supply (400);
a plurality of antenna elements (402) powered by the power supply (400) to emit a wavefront (408);
a plurality of phase shifters (404), each phase shifter associated with a respective antenna element (402) for delaying the wavefront (408) of the respective antenna element (402); and
a controller (406) configured to control a feed current for each antenna element (402) passing through a respective phase shifter.

13. The method of any one of claims 9-12, wherein the energy emitter (109) comprises:
an emitter array (510);
a projector (512) provided at a first end (514) of the emitter array (510); and
a plurality of steering elements (516) provided at an opposite second end (518) of the emitter array (510) proximate a field of view (520), each steering element receiving a respective beam (522) from the projector (512) and controlling a direction of the beam (522) toward the build material (48).

14. The method of any one of claims 9-13, further comprising:
steering the one or more emissions (111) in a width direction across the build platform (14); and
emitting a subsequent energy emission (111) to the build material (48) to increase the temperature of the build material (48) from the second temperature.
